# EUROPEAN PATENT SPECIFICATION

(11) **EP 4 166 348 B1**
(45) Date of publication and mention of the grant of the patent: **09.09.2026**
(21) Application number: 21825665.9
(22) Date of filing: 20.05.2021
(51) Int. Cl.: B60C 1/00, B60C 13/00, C08K 5/109, C08L 17/00, C08L 21/00, C08K 3/00

(54) **TIRE AND RUBBER COMPOSITION**
REIFEN UND KAUTSCHUKZUSAMMENSETZUNG
COMPOSITION DE CAOUTCHOUC ET PNEU

(30) Priority: 15.06.2020 JP 2020103118
(43) Date of publication of application: 19.04.2023
(73) Proprietor: Sumitomo Rubber Industries, Ltd., Kobe-shi, Hyogo 651-0072 (JP)
(72) Inventor: MIYAZAKI, Sumiko, Kobe-shi, Hyogo 651-0072 (JP); SATO, Daisuke, Kobe-shi, Hyogo 651-0072 (JP)
(74) Representative: Manitz Finsterwald Patent- und Rechtsanwaltspartnerschaft mbB
(86) International application number: PCT/JP2021/019092
(87) International publication number: WO 2021/256151

(56) References cited:
- EP-A1- 3 176 211
- EP-A1- 3 533 827
- EP-A1- 3 549 978
- JP-A- 2014 210 829
- JP-A- 2017 141 325
- JP-A- 2020 078 962

## Description

### TECHNICAL FIELD

The present invention relates to a tire and a rubber composition.

### BACKGROUND ART

In response to the need for improved life cycle of tires, various techniques have been proposed to improve abrasion resistance of the tread portions. Accordingly, a need has also arisen to improve the market life of components other than the tread portions. In particular, as the surface of the sidewalls are stretched and deformed during rolling of the tire, this may cause poor appearance due to the occurrence of cracks, which can be considered to indicate the timing for replacement. Thus, it has been desirable to reduce cracks or other defects on the surface of the sidewalls or other components to improve the market life of tires.

### SUMMARY OF INVENTION

### TECHNICAL PROBLEM

The present invention aims to solve the above problem and provide a tire in which cracks or other defects on the surface of a tire component can be reduced to provide an excellent market life.

### SOLUTION TO PROBLEM

The present invention relates to a tire, including a rubber layer and satisfying the following relationships (1) and (2): $E 1 / E 2 \times 100 > 25$ $E 1 / E 2 \times T \times 100 > 50$ wherein E1 denotes a fracture energy (MPa·%) determined by cutting a No. 7 dumbbell-shaped specimen cut out of the rubber layer, heat-treating the specimen with cut sections attached to each other at 170°C for 12 minutes, and then stretching and deforming the specimen; E2 denotes a fracture energy (MPa·%) determined by heat-treating a No. 7 dumbbell-shaped specimen cut out of the rubber layer at 170°C for 12 minutes and then stretching and deforming the specimen; and T denotes a thickness (mm) of the rubber layer, wherein the rubber layer contains at least one compound represented by the following formula (I): 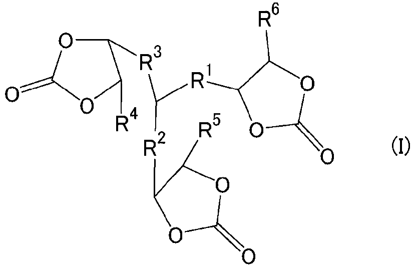 wherein R¹ to R³ are the same or different and each represent a substituted or unsubstituted divalent hydrocarbon group optionally containing a heteroatom, and R⁴ to R⁶ are the same or different and each represent a hydrogen atom or a substituted or unsubstituted monovalent hydrocarbon group optionally containing a heteroatom.

In the tire, the rubber layer preferably forms a tire component in a side portion.

In the tire, the rubber layer preferably contains at least one isoprene-based rubber.

In the tire, the rubber layer preferably contains, per 100 parts by mass of a rubber component content therein, 3 to 15 parts by mass of the compound of formula (I).

In the tire, the rubber layer preferably contains, per 100 parts by mass of a rubber component content therein, 20 to 60 parts by mass of at least one filler.

In the tire, the rubber layer preferably contains at least one selected from the group consisting of reclaimed rubbers and rubber powders.

In the tire, a tire component formed of the rubber layer preferably has a surface with at least one of a depression or projection having a height or depth of at least 0.5 mm.

The tire preferably satisfies the following two relationships with respect to the above-defined E1, E2, and T (mm): $E 1 / E 2 \times 100 \geq 45 ;$ $E 1 / E 2 \times T \times 100 \geq 90 .$

The tire preferably satisfies the following three relationships with respect to the above-defined E1, E2, and T (mm): $E 1 \geq 800 MPa ⋅ % ;$ $E 2 \geq 1500 MPa ⋅ % ;$ $T \geq 1.5 mm .$

In the tire, preferably, the rubber layer contains at least one of carbon black or silica,
when the rubber layer contains the carbon black, it contains, per 100 parts by mass of a rubber component content therein, 10 to 100 parts by mass of the carbon black, and
when the rubber layer contains the silica, it contains, per 100 parts by mass of a rubber component content therein, 10 to 100 parts by mass of the silica.

The present invention also relates to a rubber composition, containing:
at least one rubber component; and
at least one compound represented by the following formula (I): 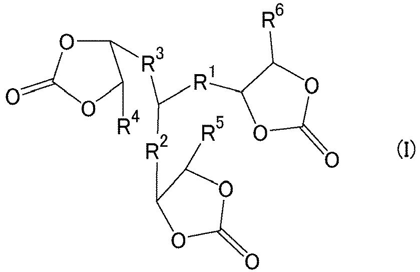 wherein R¹ to R³ are the same or different and each represent a substituted or unsubstituted divalent hydrocarbon group optionally containing a heteroatom, and R⁴ to R⁶ are the same or different and each represent a hydrogen atom or a substituted or unsubstituted monovalent hydrocarbon group optionally containing a heteroatom,
the rubber composition containing 3 to 13 parts by mass of the compound of formula (I) per 100 parts by mass of the rubber component content.

In the rubber composition, the rubber component preferably includes at least one isoprene-based rubber.

The rubber composition preferably contains 20 to 60 parts by mass of at least one filler per 100 parts by mass of the rubber component content.

The rubber composition preferably contains at least one selected from the group consisting of reclaimed rubbers and rubber powders.

### ADVANTAGEOUS EFFECTS OF INVENTION

The tire according to the present invention includes a rubber layer and satisfies relationships (1) and (2) with respect to the fracture energy E1 (MPa·%) determined by cutting a No. 7 dumbbell-shaped specimen cut out of the rubber layer, heat-treating the specimen with the cut sections attached to each other at 170°C for 12 minutes, and then stretching and deforming the specimen; the fracture energy E2 (MPa·%) determined by heat-treating a No. 7 dumbbell-shaped specimen cut out of the rubber layer at 170°C for 12 minutes and then stretching and deforming the specimen; and the thickness T (mm) of the rubber layer, wherein the rubber layer contains at least one compound represented by the following formula (I): 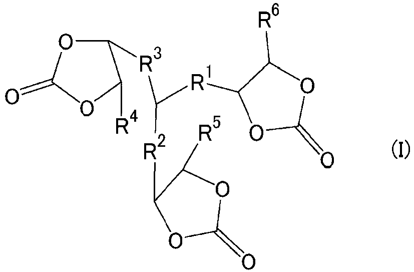 wherein R¹ to R³ are the same or different and each represent a substituted or unsubstituted divalent hydrocarbon group optionally containing a heteroatom, and R⁴ to R⁶ are the same or different and each represent a hydrogen atom or a substituted or unsubstituted monovalent hydrocarbon group optionally containing a heteroatom. Thus, the present invention provides a tire in which cracks or other defects on the surface of a tire component can be reduced to provide an excellent market life.

### BRIEF DESCRIPTION OF DRAWINGS

FIG. 1 illustrates a schematic diagram of a process of measuring the fracture energy E1 determined by cutting a No. 7 dumbbell-shaped specimen, heat-treating the specimen with the cut sections attached to each other at 170°C for 12 minutes, and then stretching and deforming the specimen.
FIG. 2 illustrates a schematic diagram of a process of measuring the fracture energy E2 determined by heat-treating a No. 7 dumbbell-shaped specimen at 170°C for 12 minutes and then stretching and deforming the specimen.
FIG. 3 illustrates a meridional cross-sectional view of an exemplary pneumatic tire 1 according to an embodiment of the present invention.
FIG. 4 illustrates an exemplary schematic view of a side face of the tire 1.

### DESCRIPTION OF EMBODIMENTS

The tire of the present invention includes a rubber layer and satisfies relationships (1) and (2) with respect to the fracture energy E1 (MPa·%) determined by cutting a No. 7 dumbbell-shaped specimen cut out of the rubber layer, heat-treating the specimen with the cut sections attached to each other at 170°C for 12 minutes, and then stretching and deforming the specimen; the fracture energy E2 (MPa·%) determined by heat-treating a No. 7 dumbbell-shaped specimen cut out of the rubber layer at 170°C for 12 minutes and then stretching and deforming the specimen; and the thickness T (mm) of the rubber layer, wherein the rubber layer contains at least one compound represented by the following formula (I): 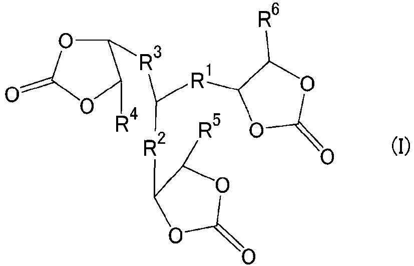 wherein R¹ to R³ are the same or different and each represent a substituted or unsubstituted divalent hydrocarbon group optionally containing a heteroatom, and R⁴ to R⁶ are the same or different and each represent a hydrogen atom or a substituted or unsubstituted monovalent hydrocarbon group optionally containing a heteroatom. In such a tire, cracks or other defects on the surface of the tire component can be reduced to provide an excellent market life.

The mechanism of this advantageous effect is not clear but is believed to be as follows.

The tire includes a rubber layer in which the fracture energy (E1) of a sample (heat-treated re-fused sample) prepared by once cutting a No. 7 dumbbell-shaped specimen taken from the rubber layer and then heat-treating the specimen with the cut sections attached to each other to re-form it is more than 1/4 of the fracture energy (E2) of a sample (heat-treated uncut sample) prepared by heat-treating a No. 7 dumbbell-shaped specimen taken as described above. Thus, it is believed that since, even if fine cracks occur in the rubber layer during driving, the cracks can be re-fused by the heat built-up during driving, the heat during storage, or other factors, and further the fracture energy of the fused surfaces is higher than in conventional tires, the occurrence and growth of cracks during driving can be reduced. It is also believed that since the thickness T is a relatively large thickness enough to satisfy relationship (2), crack propagation in the thickness direction of the rubber layer can also be prevented at the same time. It is believed that a tire in which cracks or other defects on the surface of a tire component can be reduced to provide an excellent market life can be provided due to the above mechanism of action.

As described above, the tire solves the problem (purpose) of providing a tire in which cracks or other defects on the surface of a tire component can be reduced to provide an excellent market life, by formulating a tire satisfying the relationship (1): E1/E2 × 100 > 25 and the relationship (2): E1/E2 × T × 100 > 50. In other words, the formulation satisfying relationships (1) and (2) does not define the problem (purpose), and the problem herein is to provide a tire in which cracks or other defects on the surface of a tire component can be reduced to provide an excellent market life. In order to solve this problem, the tire has been formulated to satisfy the above parameters.

The tire satisfies the following relationship (1): $E 1 / E 2 \times 100 > 25$ wherein E1 denotes the fracture energy (MPa·%) determined by cutting a No. 7 dumbbell-shaped specimen cut out of the rubber layer, heat-treating the specimen with the cut sections attached to each other at 170°C for 12 minutes, and then stretching and deforming the specimen; and E2 denotes the fracture energy (MPa·%) determined by heat-treating a No. 7 dumbbell-shaped specimen cut out of the rubber layer at 170°C for 12 minutes and then stretching and deforming the specimen.

To reduce cracks or other defects on the surface of the tire component to improve the market life of the tire, the value of "E1/E2 × 100" is preferably 27 or higher, more preferably 35 or higher, still more preferably 45 or higher, particularly preferably 47 or higher. The value of "E1/E2 × 100" may also be 49 or higher, 50 or higher, 52 or higher, 53 or higher, 55 or higher, 57 or higher, 58 or higher, or 61 or higher. The upper limit of the value of "E1/E2 × 100" is not limited, and a value closer to 100 is more desirable.

The relationship (1): E1/E2 × 100 > 25 may be satisfied, for example, by incorporating a compound represented by formula (I) described below.

The above-defined E1 is preferably 300 MPa·% or higher, more preferably 348 MPa·% or higher, still more preferably 350 MPa·% or higher, particularly preferably 800 MPa·% or higher. The above-defined E1 may also be 1300 MPa·% or higher, 1800 MPa·% or higher, 1900 MPa·% or higher, 2000 MPa·% or higher, 2200 MPa·% or higher, 2300 MPa·% or higher, 2305 MPa·% or higher, or 2500 MPa·% or higher. The upper limit is not limited, but is preferably 4000 MPa·% or lower, more preferably 3500 MPa·% or lower, still more preferably 3000 MPa·% or lower. When E1 is within the range indicated above, cracks or other defects on the surface of the tire component tend to be reduced to improve the market life of the tire.

The above-defined E2 is preferably 600 MPa·% or higher, more preferably 1300 MPa·% or higher, still more preferably 1310 MPa·% or higher, particularly preferably 1500 MPa·% or higher. The above-defined E2 may also be 1600 MPa·% or higher, 2600 MPa·% or higher, 3800 MPa·% or higher, 3900 MPa·% or higher, 4000 MPa·% or higher, 4050 MPa·% or higher, 4072 MPa·% or higher, 4100 MPa·% or higher, 4200 MPa·% or higher, or 4300 MPa·% or higher. The upper limit is not limited, but is preferably 8000 MPa·% or lower, more preferably 7000 MPa·% or lower, still more preferably 6000 MPa·% or lower. When E2 is within the range indicated above, cracks or other defects on the surface of the tire component tend to be reduced to improve the market life of the tire.

Herein, the fracture energy E (MPa·%) is the value of "(TB × EB)/2" calculated from the tensile strength at break TB (MPa) and elongation at break EB (%) measured at 23°C in accordance with JIS K6251:2010, and may specifically be determined as described later in EXAMPLES.

The elongation at break (EB) may be controlled mainly by the amounts of reinforcing agents or softeners. The tensile strength at break (TB) may be controlled mainly by the types and amounts of reinforcing agents or rubber components.

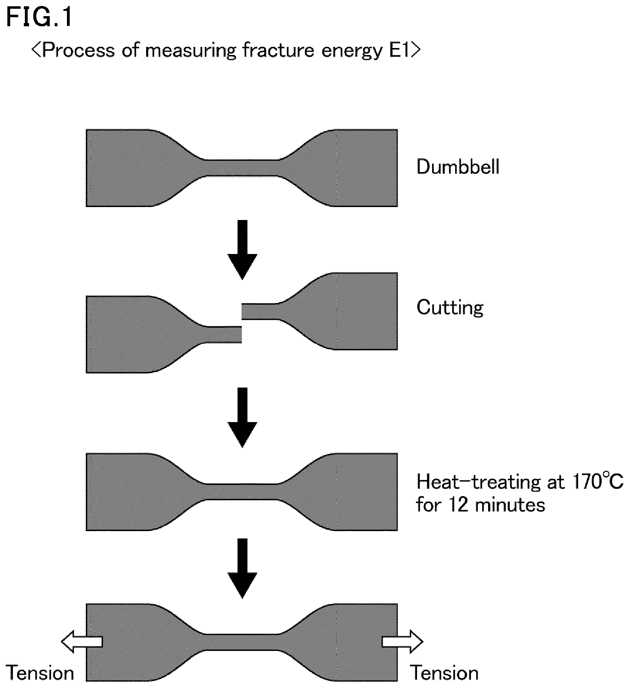

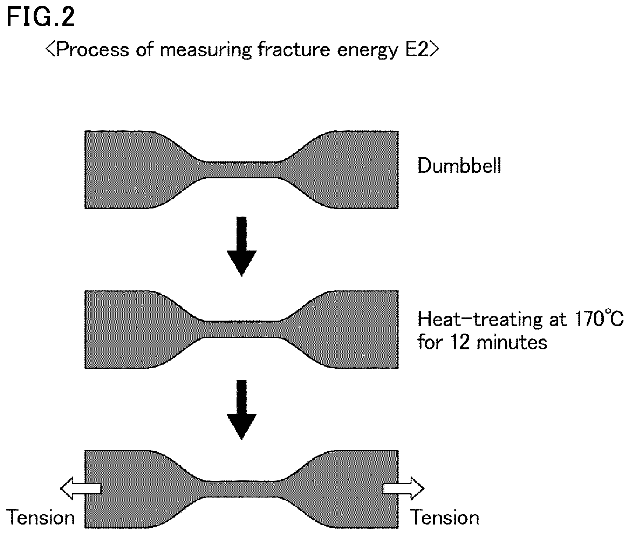

FIG. 1 illustrates a schematic diagram of a process of measuring the fracture energy E1 determined by cutting a No. 7 dumbbell-shaped specimen, heat-treating the specimen with the cut sections attached to each other at 170°C for 12 minutes, and then stretching and deforming the specimen. FIG. 2 illustrates a schematic diagram of a process of measuring the fracture energy E2 determined by heat-treating a No. 7 dumbbell-shaped specimen at 170°C for 12 minutes and then stretching and deforming the specimen.

As shown in FIG. 1, the measurement of E1 is carried out as follows: First, a thin central portion of a No. 7 dumbbell-shaped specimen is cut in a direction substantially perpendicular to the tensile direction of a tensile test; subsequently, the cut sections are re-attached to each other, and the specimen with the thus attached sections is heat-treated under predetermined conditions; and the heat-treated re-fused sample is stretched and deformed in the tensile direction to measure the elongation at break EB and the tensile strength at break TB, which are then used to calculate the fracture energy. As shown in FIG. 2, the measurement of E2 is carried out as follows: A No. 7 dumbbell-shaped specimen is heat-treated under predetermined conditions, and the resulting heat-treated uncut sample is stretched and deformed in the tensile direction to measure the elongation at break EB and the tensile strength at break TB, which are then used to calculate the fracture energy.

The tire satisfies the following relationship (2) with respect to the above-defined E1 (MPa·%), the above-defined E2 (MPa·%), and the thickness T (mm) of the rubber layer: $E 1 / E 2 \times T \times 100 > 50$

To reduce cracks or other defects on the surface of the tire component to improve the market life of the tire, the value of "E1/E2 × T × 100" is preferably 52 or higher, more preferably 53 or higher, still more preferably 54 or higher, particularly preferably 67 or higher. The value of "E1/E2 × T × 100" may also be 75 or higher, 90 or higher, 95 or higher, 97 or higher, 100 or higher, 105 or higher, 107 or higher, 110 or higher, 113 or higher, 114 or higher, 115 or higher, 116 or higher, 122 or higher, or 125 or higher. The upper limit is not limited, but is preferably 300 or lower, more preferably 200 or lower, still more preferably 170 or lower, particularly preferably 144 or lower, most preferably 140 or lower.

The relationship (2): E1/E2 × T × 100 > 50 may be satisfied by controlling the thickness T of the rubber layer while controlling the value of "E1/E2 × 100" as described above.

The thickness T of the rubber layer is preferably 1.5 mm or more, more preferably 2.0 mm or more, still more preferably 2.3 mm or more, particularly preferably 2.5 mm or more. The upper limit is not limited, but is preferably 5.0 mm or less, more preferably 4.7 mm or less, still more preferably 4.5 mm or less. When the thickness is within the range indicated above, cracks or other defects on the surface of the tire component tend to be reduced to improve the market life of the tire.

Herein, the thickness T of the rubber layer refers to the maximum thickness of each tire component (e.g., sidewall, tread) forming each rubber layer. The thickness of each rubber layer (each tire component) at each point on the surface thereof is measured along a normal to the surface of the each rubber layer (each tire component) at the each point. The thickness T of each rubber layer (each rubber component) is the largest one among the thicknesses at each point.

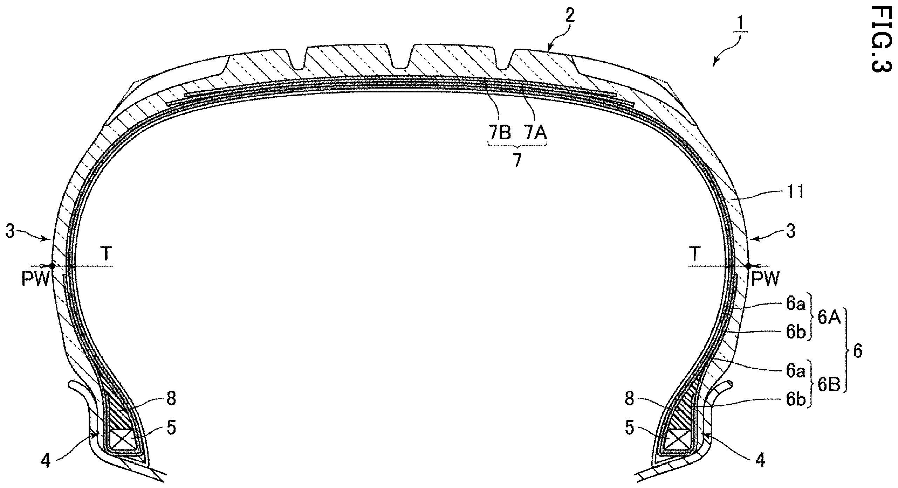

FIG. 3 illustrates a meridional cross-sectional view of an exemplary pneumatic tire 1 according to an embodiment of the present invention, which shows the thickness of a sidewall as a rubber layer. In FIG. 3, the vertical direction corresponds to the radial direction of the tire 1, the horizontal direction corresponds to the axial direction of the tire 1, and the direction perpendicular to the paper corresponds to the circumferential direction of the tire 1.

The tire 1 includes a carcass 6 extending from a tread portion 2 to a bead core 5 of a bead portion 4 via a side portion 3, and a belt layer 7 provided on the tread portion 2 and outwardly of the carcass 6 with respect to the tire radial direction.

The carcass 6 includes at least one, in the present embodiment two carcass plies 6A and 6B. In the carcass plies 6A and 6B, carcass cords (not shown) are arranged at an angle of, for example, 75° to 90° relative to the tire circumferential direction. Examples of the carcass cords include organic fiber cords such as aromatic polyamide or rayon cords.

The carcass plies 6A and 6B in the present embodiment each have a body portion 6a which extends from the tread portion 2 to the bead core 5 of the bead portion 4 via the sidewall portion 3, and a folded portion 6b which is connected to the body portion 6a and is folded around the bead core 5 from the inside to the outside in the tire axial direction. A bead apex rubber 8 extending outwardly from the bead core 5 with respect to the tire radial direction is provided between the body portion 6a and the folded portion 6b of each of the carcass plies 6A and 6B.

The belt layer 7 includes at least one, in the present embodiment two belt plies 7A and 7B. For example, the belt plies 7A and 7B are formed of an inner belt ply 7A provided on the carcass 6 side, and an outer belt ply 7B provided outwardly of the inner belt ply 7A with respect to the tire radial direction. In the belt plies 7A and 7B, belt cords (not shown) are arranged at an angle of preferably 10° to 35° relative to the tire circumferential direction. The inner and outer belt plies 7A and 7B in the present embodiment are stacked in such an orientation that the belt cords of one cross the belt cords of the other.

The belt cords may suitably include, for example, steel, aromatic polyamide, or rayon cords. Here, although the belt layer 7 in the present embodiment includes two belt plies 7A and 7B, it may include three or more belt plies. In this case, the outer belt ply 7B corresponds to the belt ply that is outermost with respect to the tire radial direction among the belt plies.

In the sidewall portion 3, a sidewall 11 is located outwardly from the carcass 6 with respect to the axial direction. In the pneumatic tire 1 according to the present embodiment, the thickness T measured from the outer end PW on the surface of the sidewall 11 along a normal to the surface of the carcass 6 (the distance T in the tire axial direction from either axially outer end of the tire (the surface of the sidewall 11) to the surface of the carcass 6) is the largest one among the thicknesses of the sidewall 11 at each point on the surface of the sidewall 11. In the tire 1, this largest thickness then corresponds to the thickness T of the sidewall 11.

The tire includes a rubber layer satisfying relationships (1) and (2). Examples of the rubber layer include various tire components, including specifically sidewalls, base treads, bead apexes, clinch apexes, innerliners, undertreads, breaker toppings, ply toppings, and treads. In particular, to reduce cracks or other defects on the surface or other portions to improve the market life of the tire, the rubber layer can be suitably applied to a component in a side portion and can be particularly suitably applied to a sidewall or a clinch apex.

The rubber layer may be formed of a vulcanized rubber composition, for example.

The vulcanized rubber composition is prepared from a (unvulcanized) rubber composition.

Examples of rubber components that may be used in the rubber composition include diene rubbers. Examples of the diene rubbers include isoprene-based rubbers, polybutadiene rubbers (BR), styrene-butadiene rubbers (SBR), styrene-isoprene-butadiene rubbers (SIBR), ethylene-propylene-diene rubbers (EPDM), chloroprene rubbers (CR), and acrylonitrile-butadiene rubbers (NBR). Other examples include butyl-based rubbers and fluororubbers. These may be used alone or in combinations of two or more. From the standpoint of rubber physical properties of the tire, isoprene-based rubbers, SBR, and BR are preferred among these. In particular, when the rubber composition contains an isoprene-based rubber, the above-mentioned advantageous effect can be effectively achieved.

The diene rubbers may be either unmodified or modified diene rubbers.

The modified diene rubbers may be any diene rubber having a functional group interactive with filler such as silica. Examples include a chain end-modified diene rubber obtained by modifying at least one chain end of a diene rubber with a compound (modifier) having the functional group (i.e., a chain end-modified diene rubber terminated with the functional group); a backbone-modified diene rubber having the functional group in the backbone; a backbone- and chain end-modified diene rubber having the functional group in both the backbone and chain end (e.g., a backbone- and chain end-modified diene rubber in which the backbone has the functional group and at least one chain end is modified with the modifier); and a chain end-modified diene rubber into which a hydroxy or epoxy group has been introduced by modification (coupling) with a polyfunctional compound having two or more epoxy groups in the molecule.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. Here, these functional groups may be substituted. Preferred among these are amino (preferably amino whose hydrogen atom is replaced with a C1-C6 alkyl group), alkoxy (preferably C1-C6 alkoxy), and alkoxysilyl (preferably C1-C6 alkoxysilyl) groups.

Examples of the isoprene-based rubbers include natural rubbers (NR), polyisoprene rubbers (IR), refined NR, modified NR, and modified IR. Examples of the NR include those commonly used in the rubber industry such as SIR20, RSS#3, and TSR20. Any IR may be used, and examples include those commonly used in the rubber industry such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. These may be used alone or in combinations of two or more.

When the rubber composition contains one or more isoprene-based rubbers, the amount of isoprene-based rubbers based on 100% by mass of the rubber component content is preferably 5% by mass or more, more preferably 10% by mass or more, still more preferably 20% by mass or more. The upper limit is not limited and may be 100% by mass. When the amount is within the range indicated above, cracks or other defects on the surface of the tire component tend to be reduced to improve the market life of the tire.

Any SBR may be used, including, for example, emulsion-polymerized styrene-butadiene rubbers (E-SBR) and solution-polymerized styrene-butadiene rubbers (S-SBR). These may be used alone or in combinations of two or more.

The styrene content of the SBR is preferably 5% by mass or higher, more preferably 10% by mass or higher, still more preferably 15% by mass or higher. The styrene content is also preferably 60% by mass or lower, more preferably 40% by mass or lower, still more preferably 30% by mass or lower. When the styrene content is within the range indicated above, cracks or other defects on the surface of the tire component tend to be reduced to improve the market life of the tire.

Herein, the styrene content of the SBR is determined by ¹H-NMR analysis.

SBR products manufactured or sold by Sumitomo Chemical Co., Ltd., JSR Corporation, Asahi Kasei Corporation, Zeon Corporation, etc. may be used as the SBR.

The SBR may be either unmodified or modified SBR. Examples of the modified SBR include those into which functional groups as listed for the modified diene rubbers have been introduced.

When the rubber composition contains one or more types of SBR, the amount of SBR based on 100% by mass of the rubber component content is preferably 5% by mass or more, more preferably 10% by mass or more, still more preferably 20% by mass or more. The upper limit is not limited and may be 100% by mass. When the amount is within the range indicated above, cracks or other defects on the surface of the tire component tend to be reduced to improve the market life of the tire.

Any BR may be used, including, for example, high-cis BR having a high cis content, BR containing syndiotactic polybutadiene crystals, and BR synthesized using rare earth catalysts (rare earth-catalyzed BR). These may be used alone or in combinations of two or more. To improve abrasion resistance, high-cis BR having a cis content of 90% by mass or higher is preferred among these.

Moreover, the BR may be either unmodified or modified BR. Examples of the modified BR include those into which functional groups as listed for the modified diene rubbers have been introduced.

The BR may be commercially available from, for example, Ube Industries, Ltd., JSR Corporation, Asahi Kasei Corporation, Zeon Corporation, etc.

When the rubber composition contains one or more types of BR, the amount of BR based on 100% by mass of the rubber component content is preferably 5% by mass or more, more preferably 10% by mass or more, still more preferably 20% by mass or more. The upper limit is preferably 80% by mass or less, more preferably 60% by mass or less, still more preferably 50% by mass or less. When the amount is within the range indicated above, cracks or other defects on the surface of the tire component tend to be reduced to improve the market life of the tire.

To reduce cracks or other defects on the surface of the tire component to improve the market life of the tire, the rubber composition contains a compound represented by the following formula (I): 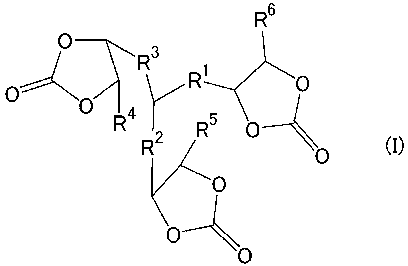 wherein R¹ to R³ are the same or different and each represent a substituted or unsubstituted divalent hydrocarbon group optionally containing a heteroatom, and R⁴ to R⁶ are the same or different and each represent a hydrogen atom or a substituted or unsubstituted monovalent hydrocarbon group optionally containing a heteroatom.

The substituted or unsubstituted divalent hydrocarbon group optionally containing a heteroatom as any of R¹ to R³ may be a linear, branched, or cyclic group, among which a cyclic group or a linear group is preferred.

The heteroatom for any of R¹ to R³ may be any heteroatom such as oxygen or nitrogen. Any substituent may be used, including known groups such as halogen groups (e.g., -Cl, -Br).

The number of carbon atoms of the substituted or unsubstituted divalent hydrocarbon group optionally containing a heteroatom as any of R¹ to R³ is preferably 1 or more, more preferably 3 or more, still more preferably 5 or more. The upper limit is preferably 20 or less, more preferably 18 or less, still more preferably 12 or less, particularly preferably 8 or less.

Specific examples of the substituted or unsubstituted divalent hydrocarbon group optionally containing a heteroatom as any of R¹ to R³ include substituted or unsubstituted C1-C30 alkylene, C2-C30 alkenylene, C5-C30 cycloalkylene, C6-C30 cycloalkylalkylene, C6-C30 arylene, and C7-C30 aralkylene groups optionally containing heteroatoms. Substituted or unsubstituted C6-C30 arylene groups optionally containing heteroatoms are preferred among these.

Specific examples of substituted or unsubstituted C1-C30 alkylene groups optionally containing heteroatoms as any of R¹ to R³ include methylene, ethylene, trimethylene, tetramethylene, pentamethylene, hexamethylene, octylene, nonylene, decylene, and 1,2-propylene groups. Examples of substituted or unsubstituted C2-C30 alkenylene groups optionally containing heteroatoms include vinylene, 1-propenylene, and 2-propenylene groups. Examples of substituted or unsubstituted C5-C30 cycloalkylene groups optionally containing heteroatoms include a cyclohexylene group. Examples of substituted or unsubstituted C6-C30 cycloalkylalkylene groups optionally containing heteroatoms include a cyclohexylmethylene group. Examples of substituted or unsubstituted C6-C30 arylene groups optionally containing heteroatoms include phenylene, tolylene, and xylylene groups. Examples of substituted or unsubstituted C7-C30 aralkylene groups optionally containing heteroatoms include a benzylidene group. A phenylene group is preferred among these, with p-phenylene group being more preferred.

Other examples of the substituted or unsubstituted divalent hydrocarbon group optionally containing a heteroatom as any of R¹ to R³ include divalent hydrocarbon groups having C=O or -O-, such as those represented by -R-C(=O)-O-R'-, -R-C(=O)-O-, or -C(=O)-O-R'-. Examples of R or R' include the above-mentioned substituted or unsubstituted C1-C30 alkylene, C2-C30 alkenylene, C5-C30 cycloalkylene, C6-C30 cycloalkylalkylene, C6-C30 arylene, and C7-C30 aralkylene groups optionally containing heteroatoms. The groups represented by -R-C(=O)-O-R'-(wherein R and R' are the same or different and each represent a C1-C30 alkylene group) or -R-C(=O)-O- (wherein R represents a C1-C30 alkylene group) are preferred among these.

The substituted or unsubstituted monovalent hydrocarbon group optionally containing a heteroatom as any of R⁴ to R⁶ may be a linear, branched, or cyclic group, among which a linear group or a branched group is preferred.

Any heteroatom and any substituent may be used for R⁴ to R⁶, including heteroatoms and substituents as described for R¹ to R³.

The number of carbon atoms of the substituted or unsubstituted monovalent hydrocarbon group optionally containing a heteroatom as any of R⁴ to R⁶ is preferably 1 or more, more preferably 3 or more, still more preferably 5 or more. The upper limit is preferably 20 or less, more preferably 18 or less, still more preferably 12 or less, particularly preferably 8 or less.

Examples of the substituted or unsubstituted monovalent hydrocarbon group optionally containing a heteroatom as any of R⁴ to R⁶ include substituted or unsubstituted linear alkyl, branched alkyl, cyclic alkyl, aryl, and aralkyl groups optionally containing heteroatoms. Linear alkyl groups and branched alkyl groups are preferred among these.

Specific examples of the substituted or unsubstituted linear alkyl or branched alkyl groups optionally containing heteroatoms as any of R⁴ to R⁶ include methyl, ethyl, n-propyl, isopropyl, n-butyl, iso-butyl, sec-butyl, tert-butyl, pentyl, hexyl, heptyl, 2-ethylhexyl, octyl, nonyl, and decyl groups, and the foregoing groups containing heteroatoms. Examples of the substituted or unsubstituted cyclic alkyl groups optionally containing heteroatoms include cyclopropyl, cyclobutyl, cyclopentyl, cyclohexyl, cycloheptyl, cyclooctyl, adamantyl, 1-ethylcyclopentyl, and 1-ethylcyclohexyl groups, and the foregoing groups containing heteroatoms. Examples of the substituted or unsubstituted aryl groups optionally containing heteroatoms include phenyl, tolyl, xylyl, biphenyl, naphthyl, anthryl, and phenanthryl groups, and the foregoing groups containing heteroatoms. Examples of the substituted or unsubstituted aralkyl groups optionally containing heteroatoms include benzyl and phenethyl groups, and the foregoing groups containing heteroatoms. Preferred among these are linear or branched alkyl groups such as methyl, ethyl, n-propyl, isopropyl, n-butyl, iso-butyl, sec-butyl, tert-butyl, pentyl, hexyl, heptyl, 2-ethylhexyl, octyl, nonyl, and decyl groups.

In the rubber composition, the amount of compounds of formula (I) per 100 parts by mass of the rubber component content is preferably 3 parts by mass or more, more preferably 5 parts by mass or more, still more preferably 7 parts by mass or more, particularly preferably 9 parts by mass or more. The upper limit is preferably 25 parts by mass or less, more preferably 20 parts by mass or less, still more preferably 15 parts by mass or less, particularly preferably 13 parts by mass or less. When the amount is within the range indicated above, cracks or other defects on the surface of the tire component tend to be reduced to improve the market life of the tire.

The rubber composition may contain a filler. Any filler may be used, including materials known in the elastomer field such as silica, carbon black, calcium carbonate, talc, alumina, clay, aluminum hydroxide, aluminum oxide, and mica. Carbon black or silica is preferred among these.

In the rubber composition, the amount of fillers (the total amount of fillers) per 100 parts by mass of the rubber component content is preferably 5 parts by mass or more, more preferably 8 parts by mass or more, still more preferably 10 parts by mass or more, particularly preferably 20 parts by mass or more, most preferably 30 parts by mass or more. Moreover, the upper limit is preferably 150 parts by mass or less, more preferably 100 parts by mass or less, still more preferably 70 parts by mass or less, particularly preferably 60 parts by mass or less, most preferably 55 parts by mass or less. When the amount is within the range indicated above, cracks or other defects on the surface of the tire component tend to be reduced to improve the market life of the tire.

Any carbon black may be used, and examples include N134, N110, N220, N234, N219, N339, N330, N326, N351, N550, and N762. Usable commercial products are available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. These may be used alone or in combinations of two or more.

The amount of carbon black per 100 parts by mass of the rubber component content is preferably 5 parts by mass or more, more preferably 10 parts by mass or more, still more preferably 15 parts by mass or more, particularly preferably 30 parts by mass or more. The amount is also preferably 150 parts by mass or less, more preferably 100 parts by mass or less, still more preferably 50 parts by mass or less. When the amount is within the range indicated above, cracks or other defects on the surface of the tire component tend to be reduced to improve the market life of the tire.

The nitrogen adsorption specific surface area (N₂SA) of the carbon black is preferably 30 m²/g or more, more preferably 80 m²/g or more, still more preferably 100 m²/g or more. The N₂SA is also preferably 200 m²/g or less, more preferably 170 m²/g or less, still more preferably 150 m²/g or less. When the N₂SA is within the range indicated above, cracks or other defects on the surface of the tire component tend to be reduced to improve the market life of the tire.

Here, the nitrogen adsorption specific surface area of the carbon black can be determined in accordance with JIS K6217-2:2001.

Examples of silica include dry silica (anhydrous silica) and wet silica (hydrous silica). Wet silica is preferred among these because it contains a large number of silanol groups. Usable commercial products are available from Degussa, Rhodia, Tosoh Silica Corporation, Solvay Japan, Tokuyama Corporation, etc. These may be used alone or in combinations of two or more.

The amount of silica per 100 parts by mass of the rubber component content is preferably 5 parts by mass or more, more preferably 10 parts by mass or more, still more preferably 15 parts by mass or more. The upper limit of the amount is not limited, but is preferably 150 parts by mass or less, more preferably 100 parts by mass or less, still more preferably 60 parts by mass or less, particularly preferably 50 parts by mass or less. When the amount is within the range indicated above, cracks or other defects on the surface of the tire component tend to be reduced to improve the market life of the tire.

The nitrogen adsorption specific surface area (N₂SA) of the silica is preferably 50 m²/g or more, more preferably 80 m²/g or more, still more preferably 100 m²/g or more. Moreover, the upper limit of the N₂SA of the silica is not limited, but is preferably 350 m²/g or less, more preferably 300 m²/g or less, still more preferably 250 m²/g or less. When the N₂SA is within the range indicated above, cracks or other defects on the surface of the tire component tend to be reduced to improve the market life of the tire.

Here, the N₂SA of the silica is measured by a BET method in accordance with ASTM D3037-93.

The rubber composition which contains silica preferably further contains a silane coupling agent.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. These may be used alone or in combinations of two or more.

The amount of silane coupling agents per 100 parts by mass of the silica content is preferably 3 parts by mass or more, more preferably 6 parts by mass or more. The amount is also preferably 20 parts by mass or less, more preferably 15 parts by mass or less. When the amount is within the range indicated above, cracks or other defects on the surface of the tire component tend to be reduced to improve the market life of the tire.

The rubber composition may contain at least one selected from the group consisting of reclaimed rubbers and rubber powders. Since reclaimed rubbers and rubber powders are additives which have once been vulcanized and have poor re-fusion ability, they are likely to produce crack initiation points. However, as the above-mentioned advantageous effect is achieved by satisfaction of relationships (1) and (2), the rubber composition containing a reclaimed rubber and/or a rubber powder also provides good crack resistance, so that the tire provides an excellent market life. The reclaimed rubbers or rubber powders may be used alone or in combinations of two or more.

For example, the reclaimed rubbers may be commercially available reclaimed rubbers. The term "reclaimed rubbers" refers to those recycled from rubbers such as used rubbers of automobile tires, tubes, or other rubber products as defined in JIS K6313-2012, as well as those having properties comparable thereto. The reclaimed rubbers have undergone desulfurization. The type of reclaimed rubber may be any one selected from the group consisting of reclaimed rubbers from tubes, reclaimed rubbers from tires, and reclaimed rubbers from other products. Multiple types of reclaimed rubbers may also be combined. The reclaimed rubbers may be produced by any method, and known methods may be employed, such as an oil pan process and a reclamator process.

The rubber components of the reclaimed rubbers preferably have a natural rubber content of 40% by mass or higher, more preferably 50% by mass or higher, still more preferably 70% by mass or higher. Here, the natural rubber content of the reclaimed rubbers is determined by pyrolysis gas chromatography (PyGC).

Rubber powders are also called powdered rubbers and refer to vulcanized rubber powders (reclaimed rubber powders) recycled from waste rubber products. The rubber powders may be made from any type of waste rubber, including those containing at least one selected from the group consisting of natural rubbers and synthetic rubbers. The rubber powders may be produced by any method, e.g., as described in WO 2018/225564.

The particle size of the rubber powders is preferably 80 mesh or less. Here, 80 mesh rubber powders refer to rubber powders that have passed through a 80-mesh sieve defined in ASTM D563-01(2008). The particle size of the rubber powders is more preferably 40 to 80 mesh, still more preferably 50 to 70 mesh.

When the rubber composition contains at least one selected from the group consisting of reclaimed rubbers and rubber powders, in an embodiment at least one reclaimed rubber and/or rubber powder may be previously mixed with chemicals which can react with crosslinked rubbers such as additives.

In view of environmental concerns, the combined amount of reclaimed rubbers and rubber powders per 100 parts by mass of the rubber component content is preferably 5 parts by mass or more, more preferably 10 parts by mass or more. The upper limit of the combined amount is not limited, but is preferably 100 parts by mass or less, more preferably 50 parts by mass or less, still more preferably 30 parts by mass or less, further preferably 15 parts by mass or less.

The rubber composition may contain a plasticizer. The term "plasticizer" refers to a material which can impart plasticity to rubber components, and examples include liquid plasticizers (plasticizers that are liquid at room temperature (25°C)) and resins (resins that are solid at room temperature (25°C)).

When the rubber composition contains one or more plasticizers, the amount thereof (the total amount of plasticizers) per 100 parts by mass of the rubber component content is preferably 1 part by mass or more, more preferably 2 parts by mass or more, still more preferably 3 parts by mass or more. The upper limit is preferably 50 parts by mass or less, more preferably 30 parts by mass or less, still more preferably 20 parts by mass or less. When the amount is within the range indicated above, cracks or other defects on the surface of the tire component tend to be reduced to improve the market life of the tire.

Any liquid plasticizer (plasticizer that is liquid at room temperature (25°C)) may be used, and examples include oils, liquid resins, and liquid diene polymers. These may be used alone or in combinations of two or more.

When the rubber composition contains one or more liquid plasticizers, the amount thereof per 100 parts by mass of the rubber component content is preferably 1 part by mass or more, more preferably 2 parts by mass or more, still more preferably 3 parts by mass or more. The upper limit is preferably 30 parts by mass or less, more preferably 20 parts by mass or less, still more preferably 15 parts by mass or less. When the amount is within the range indicated above, cracks or other defects on the surface of the tire component tend to be reduced to improve the market life of the tire.

Examples of oils include process oils, plant oils, and mixtures thereof. Examples of the process oils include paraffinic process oils, aromatic process oils, and naphthenic process oils. Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Usable commercial products are available from Idemitsu Kosan Co., Ltd., Sankyo Yuka Kogyo K.K., Japan Energy Corporation, Olisoy, H&R, Hokoku Corporation, Showa Shell Sekiyu K.K., Fuji Kosan Co., Ltd., The Nisshin Oillio Group, Ltd., etc. Process oils such as paraffinic process oils, aromatic process oils, and naphthenic process oils, or plant oils are preferred among these.

Examples of liquid resins include terpene resins (including terpene phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenol resins, olefin resins, polyurethane resins, and acrylic resins, all of which are liquid at 25°C.

Examples of liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers, all of which are liquid at 25°C. The chain end or backbone of these polymers may be modified with a polar group.

Examples of the resins (resins that are solid at room temperature (25°C)) include coumarone-indene resins, terpene resins, styrene resins, p-t-butylphenol acetylene resins, and acrylic resins, all of which are solid at room temperature (25°C). These may be used alone or in combinations of two or more. The resins may also be hydrogenated.

In the rubber composition, the amount of the resins per 100 parts by mass of the rubber component content is preferably 0.1 parts by mass or more, more preferably 0.5 parts by mass or more, still more preferably 1 part by mass or more. The upper limit is preferably 30 parts by mass or less, more preferably 20 parts by mass or less, still more preferably 15 parts by mass or less, particularly preferably 10 parts by mass or less. When the amount is within the range indicated above, cracks or other defects on the surface of the tire component tend to be reduced to improve the market life of the tire.

Coumarone-indene resins include resins that contain coumarone and indene as the monomer components forming the skeleton (backbone) of the resins. Examples of monomer components which may be contained in the skeleton in addition to coumarone and indene include styrene, α-methylstyrene, methylindene, and vinyltoluene.

Examples of terpene resins include polyterpene, terpene phenol, and aromatic modified terpene resins.

The term "polyterpene" refers to a resin produced by polymerizing a terpene compound, or a hydrogenated product thereof. The term "terpene compound" refers to a hydrocarbon having a composition represented by (C₅H₈)ₙ, or an oxygen-containing derivative thereof, each of which has a terpene backbone and is classified as, for example, a monoterpene (C₁₀H₁₆), sesquiterpene (C₁₅H₂₄), or diterpene (C₂₀H₃₂). Examples of such terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include terpene resins made from the above-mentioned terpene compounds, such as α-pinene resins, β-pinene resins, limonene resins, dipentene resins, and β-pinene-limonene resins, and hydrogenated terpene resins produced by hydrogenation of these terpene resins. Examples of the terpene phenol resins include resins produced by copolymerization of the above-mentioned terpene compounds and phenolic compounds, and resins produced by hydrogenation of these resins. Specific examples include resins produced by condensation of the above-mentioned terpene compounds, phenolic compounds, and formaldehyde. Examples of the phenolic compounds include phenol, bisphenol A, cresol, and xylenol. Examples of the aromatic modified terpene resins include resins produced by modification of terpene resins with aromatic compounds, and resins produced by hydrogenation of these resins. Here, the aromatic compounds may be any compound having an aromatic ring, and examples include phenol compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene and styrene derivatives such as alkylstyrenes, alkoxystyrenes, and unsaturated hydrocarbon group-containing styrenes; coumarone; and indene.

Styrene resins refer to polymers mainly containing structural units derived from styrenes. Examples include homopolymers of styrenes (e.g., styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene), copolymers of two or more styrenes, and copolymers of styrenes and other monomers. Copolymers of two or more styrenes are preferred among these, with copolymers of α-methylstyrene and styrene being more preferred.

Examples of p-t-butylphenol acetylene resins include resins produced by condensation of p-t-butylphenol and acetylene.

Any acrylic resin may be used, but solvent-free acrylic resins are suitable because they contain few impurities and provide a sharp molecular weight distribution.

Examples of the solvent-free acrylic resins include (meth)acrylic resins (polymers) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5,010,166, and annual research report TREND 2000 issued by Toagosei Co., Ltd., vol. 3, pp. 42-45) using no or minimal amounts of auxiliary raw materials such as polymerization initiators, chain transfer agents, and organic solvents. In the present invention, the term "(meth)acrylic" means methacrylic and acrylic.

Preferably, the acrylic resins are substantially free of auxiliary raw materials such as polymerization initiators, chain transfer agents, and organic solvents. Also preferably, the acrylic resins are produced by continuous polymerization and have a relatively narrow compositional distribution or molecular weight distribution.

As described above, preferred among the acrylic resins are those which are substantially free of auxiliary raw materials such as polymerization initiators, chain transfer agents, and organic solvents, namely those of high purity. The purity of the acrylic resins (the resin content of the resins) is preferably 95% by mass or higher, more preferably 97% by mass or higher.

Examples of the monomer components forming the acrylic resins include (meth)acrylic acids and (meth)acrylic acid derivatives such as (meth)acrylic acid esters (e.g., alkyl esters, aryl esters, and aralkyl esters), (meth)acrylamides, and (meth)acrylamide derivatives.

In addition to the (meth)acrylic acids or (meth)acrylic acid derivatives, aromatic vinyls, such as styrene, α-methylstyrene, vinyltoluene, vinylnaphthalene, divinylbenzene, trivinylbenzene, or divinylnaphthalene, may also be used as the monomer components forming the acrylic resins.

The acrylic resins may be formed only of (meth)acrylic components or may further contain constituent components other than the (meth)acrylic components.

Moreover, the acrylic resins may contain a hydroxy group, a carboxyl group, a silanol group, or other groups.

The plasticizers may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JXTG Nippon Oil & Energy Corporation, Arakawa Chemical Industries, Ltd., Taoka Chemical Co., Ltd., etc.

From the standpoints of crack resistance, ozone resistance, and other properties, the rubber composition may contain an antioxidant.

Any antioxidant may be used, and examples include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Preferred among these are p-phenylenediamine or quinoline antioxidants, with N-(1,3-dimethylbutyl)-N'-phenyl-p-phenylenediamine or polymerized 2,2,4-trimethyl-1,2-dihydroquinoline being more preferred. Usable commercial products are available from, for example, Seiko Chemical Co., Ltd., Sumitomo Chemical Co., Ltd., Ouchi Shinko Chemical Industrial Co., Ltd., Flexsys, etc.

In the rubber composition, the amount of antioxidants per 100 parts by mass of the rubber component content is preferably 0.2 parts by mass or more, more preferably 0.5 parts by mass or more. The amount is preferably 7.0 parts by mass or less, more preferably 4.0 parts by mass or less.

The rubber composition may contain stearic acid. In the rubber composition, the amount of stearic acid per 100 parts by mass of the rubber component content is preferably 0.5 to at least 10 parts by mass, more preferably 0.5 to 5 parts by mass.

Here, the stearic acid used may be a conventional one, e.g., available from NOF Corporation, NOF Corporation, Kao Corporation, FUJIFILM Wako Pure Chemical Corporation, Chiba Fatty Acid Co., Ltd., etc.

The rubber composition preferably contains zinc oxide. In the rubber composition, the amount of zinc oxide per 100 parts by mass of the rubber component content is preferably 0.5 to 10 parts by mass, more preferably 1 to 5 parts by mass.

Here, the zinc oxide used may be a conventional one, e.g., available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc.

The rubber composition may contain a wax. In the rubber composition, the amount of waxes per 100 parts by mass of the rubber component content is preferably 0.5 to 10 parts by mass, more preferably 1 to 5 parts by mass.

Any wax may be used such as petroleum waxes and natural waxes, as well as synthetic waxes produced by purifying or chemically treating a plurality of waxes. These waxes may be used alone or in combinations of two or more.

Examples of the petroleum waxes include paraffin waxes and microcrystalline waxes. The natural waxes may be any wax derived from non-petroleum resources, and examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of the foregoing waxes. Usable commercial products are available from, for example, Ouchi Shinko Chemical Industrial Co., Ltd., Nippon Seiro Co., Ltd., Seiko Chemical Co., Ltd., etc.

The rubber composition may contain sulfur to moderately crosslink the polymer chains.

In the rubber composition, the amount of sulfur per 100 parts by mass of the rubber component content is preferably 0.1 parts by mass or more, more preferably 0.5 parts by mass or more, still more preferably 0.7 parts by mass or more. The amount is preferably 6.0 parts by mass or less, more preferably 4.0 parts by mass or less, still more preferably 3.0 parts by mass or less.

Examples of the sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The rubber composition may contain a vulcanization accelerator.

In the rubber composition, the amount of vulcanization accelerators is not limited and may be arbitrarily selected according to the desired cure rate or crosslink density, but the amount per 100 parts by mass of the rubber component content is usually 0.3 to 10 parts by mass, preferably 0.5 to 7 parts by mass.

Any type of vulcanization accelerator may be used including usual ones. Examples of vulcanization accelerators include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. From the standpoint of the balance of the above-mentioned properties, sulfenamide or guanidine vulcanization accelerators are preferred among these.

In addition to the above-mentioned components, the rubber composition may contain any appropriate additive usually used in the application field, such as release agents, processing aids (e.g., metal salts of fatty acids), and pigments. The amounts of these additives may be appropriately selected.

The vulcanized rubber composition may be prepared by known methods. For example, it may be prepared, for example, by kneading a (unvulcanized) rubber composition containing the above-mentioned components in a rubber kneading machine such as an open roll mill or a Banbury mixer, followed by crosslinking. The kneading conditions include a kneading temperature of usually 50 to 200°C, preferably 80 to 190°C and a kneading time of usually 30 seconds to 30 minutes, preferably 1 minute to 30 minutes.

In the tire, the tire component formed of the rubber layer may have a surface with a depression and/or projection. In general, when a depression and/or projection is present on the surface, the depressed and/or projecting interface (corner) is likely to deform, which may cause the formation of cracks. However, as the above-mentioned advantageous effect is achieved by satisfaction of relationships (1) and (2), the rubber layer having a surface with a depression and/or projection also provides good crack resistance, so that the tire provides an excellent market life.

The depression and/or projection may be any portion having a depressed shape and/or a projecting shape. Examples include protrusions (e.g., fins), dimples, and local depressions or projections formed of ribs which display letters, figures, symbols, etc. for decoration, information, and other purposes (e.g., markings, size indications, etc. on the sidewall portion of a tire).

The depth or height of the depression and/or projection 21 is preferably at least 0.5 mm. The depth or height is preferably at least 0.6 mm, more preferably at least 0.7 mm. The upper limit of the depth or height is not limited, but is preferably at most 2.5 mm, more preferably at most 2.0 mm, still more preferably at most 1.5 mm, particularly preferably at most 1.0 mm. Herein, the depth or height of the depression and/or projection 21 refers to the maximum depth or the maximum height of each depression and/or projection (each dimple or each protrusion).

The tire can be produced from the above-described rubber composition by usual methods. For example, an unvulcanized rubber composition containing the components may be extruded into the shape of a tire component such as a sidewall and then formed together with other tire components in a usual manner on a tire building machine to build an unvulcanized tire, followed by heating and pressuring it in a vulcanizer to produce a tire.

The tire may be, for example, a pneumatic tire or an airless tire. Preferably it is a pneumatic tire, among others. For example, the tire may be suitably used as a summer tire or a winter tire (studless winter tire, snow tire, studded tire, etc.). The tire can be used as a tire for passenger vehicles, large passenger vehicles, large SUVs, heavy duty vehicles such as trucks and buses, light trucks, or motorcycles, or as a racing tire (high performance tire), etc.

### EXAMPLES

The present invention will be specifically described with reference to, but not limited to, examples.

### (Production Example 1)

An amount of 20 g of tris(4-hydroxyphenyl)methane triglycidyl ether (Aldrich) was mixed with 1.6 g of tetrabutylammonium iodide (Aldrich) and they were reacted at 80°C for 24 hours while blowing carbon dioxide gas therethrough to produce a compound represented by the formula (I-1) below.

### (Production Example 2)

An amount of 20 g of epoxidized soybean oil (ADEKA Corporation) was mixed with 1.6 g of tetrabutylammonium iodide (Aldrich) and they were reacted at 110°C for 70 hours while blowing carbon dioxide gas therethrough to produce a compound represented by the formula (I-2) below.

The chemicals used are listed below.
NR: TSR20
SBR: SBR1502 available from JSR Corporation
Additive 1: the compound synthesized in Production Example 1 (the compound represented by the following formula (I-1), tris(4-hydroxyphenyl)methane tricyclocarbonate) 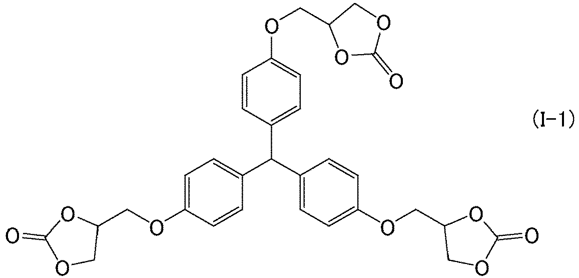
Additive 2: the compound synthesized in Production Example 2 (the compound represented by the following formula (I-2)) 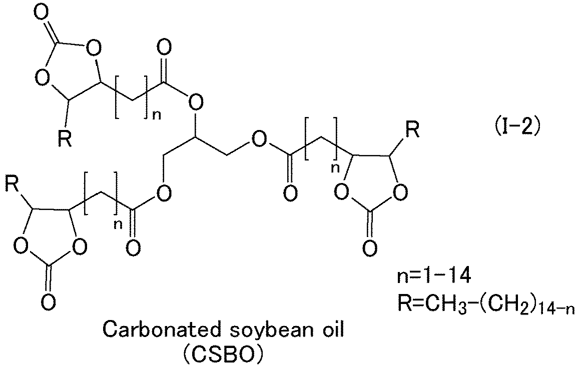
Carbon black: SHOBLACK N220 (N₂SA: 111 m²/g) available from Cabot Japan K.K.
Silica: ULTRASIL VN3 (N₂SA: 175 m²/g) available from Evonik Degussa
Silane coupling agent: Si266 (bis(3-triethoxysilylpropyl) disulfide) available from Evonik Degussa
Reclaimed rubber: a product (NR content: 73% by mass) available from Muraoka Rubber Reclaiming Co., Ltd.
Rubber powder: a product (NR content: 67% by mass) available from Lehigh Technologies in US
Wax: Ozoace OZ0355 available from Nippon Seiro Co., Ltd.
Antioxidant 6C: NOCRAC 6C (N-phenyl-N'-(1,3-dimethylbutyl)-p-phenylenediamine) available from Ouchi Shinko Chemical Industrial Co., Ltd.
Stearic acid: stearic acid "TSUBAKI" available from NOF Corporation
Zinc oxide: zinc oxide #2 available from Mitsui Mining & Smelting Co., Ltd.
Sulfur: powdered sulfur available from Tsurumi Chemical Industry Co., Ltd.
Vulcanization accelerator: NOCCELER NS (N-tert-butyl-2-benzothiazolylsulfenamide) available from Ouchi Shinko Chemical Industrial Co., Ltd.

### <Preparation of tire>

The chemicals other than the sulfur and vulcanization accelerator according to the formulation recipe shown in each table were kneaded in a 1.7 L Banbury mixer (Kobe Steel, Ltd.) at 150°C for four minutes. Next, the sulfur and vulcanization accelerator were added to the kneaded mixture, and they were kneaded in an open roll mill at 80°C for five minutes to prepare an unvulcanized rubber composition. Then, the unvulcanized rubber composition was formed into a sidewall shape and assembled with other tire components on a tire building machine, followed by press vulcanization at 170°C for 20 minutes to prepare a test tire (the thickness T of the sidewall and the depression and/or projection on the sidewall surface are indicated in the table, size: 195/65R15).

### (Specification of surface of sidewall portion of tire shown in Table 4)

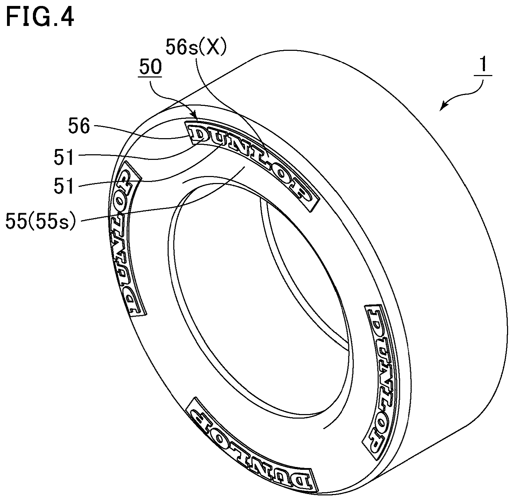

- A brand name (depression and/or projection) as illustrated in FIG. 4 was disposed in the tire circumferential direction with a width of 30 mm and an interval between the marks of 2 mm or more (the marks were disposed in four locations on the circumference as illustrated in FIG. 4).
- Height of mark: 1.0 mm

The test tires prepared as above were evaluated as follows. The tables show the results. Comparative Examples 1-1, 2-1, 3-1, and 4-1 are used as standards of comparison in Tables 1, 2, 3, and 4, respectively.

### <Measurement of fracture energies E1 and E2>

A No. 7 dumbbell-shaped specimen (vulcanized rubber composition) was cut out of (or taken from) the sidewall of each test tire using a razor. Subsequently, according to the process illustrated in FIG. 1, the thin portion of the dumbbell specimen was cut with a razor in a direction substantially perpendicular to the tensile direction, the cut sections were then re-attached to each other, and this specimen was heat-treated (in air atmosphere) at 170°C for 12 minutes to prepare a heat-treated re-fused sample. Separately, a No. 7 dumbbell-shaped specimen cut out as described above was heat-treated (in air atmosphere) at 170°C for 12 minutes to prepare a heat-treated uncut sample. The heat-treated re-fused sample and the heat-treated uncut sample were subjected to a tensile test at 23°C in accordance with JIS K6251:2010 "Rubber, vulcanized or thermoplastics - Determination of tensile stress-strain properties" to measure the elongation at break EB (%) at 23°C and the tensile strength at break TB (MPa) at 23°C, which were used to calculate the fracture energy E (MPa·%) (= TB × EB/2) (the heat-treated re-fused sample and the heat-treated uncut sample were used to determine E1 and E2, respectively).

### (Tensile test conditions)

Ambient temperature: 23°C
Test device: trade name "Strograph" available from Toyo Seiki Seisaku-sho, Ltd.
Tensile rate: 500 mm/min

### <Crack resistance>

The test tires prepared as above were mounted and subjected to 30000 km driving at a speed of 80 km/h and a load of 4.7 kN. Then, the amount of crack growth in the sidewall was measured to evaluate the crack resistance. The results are expressed as an index relative to that of the standard comparative example taken as 100. A higher index indicates better crack resistance.

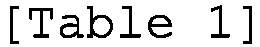

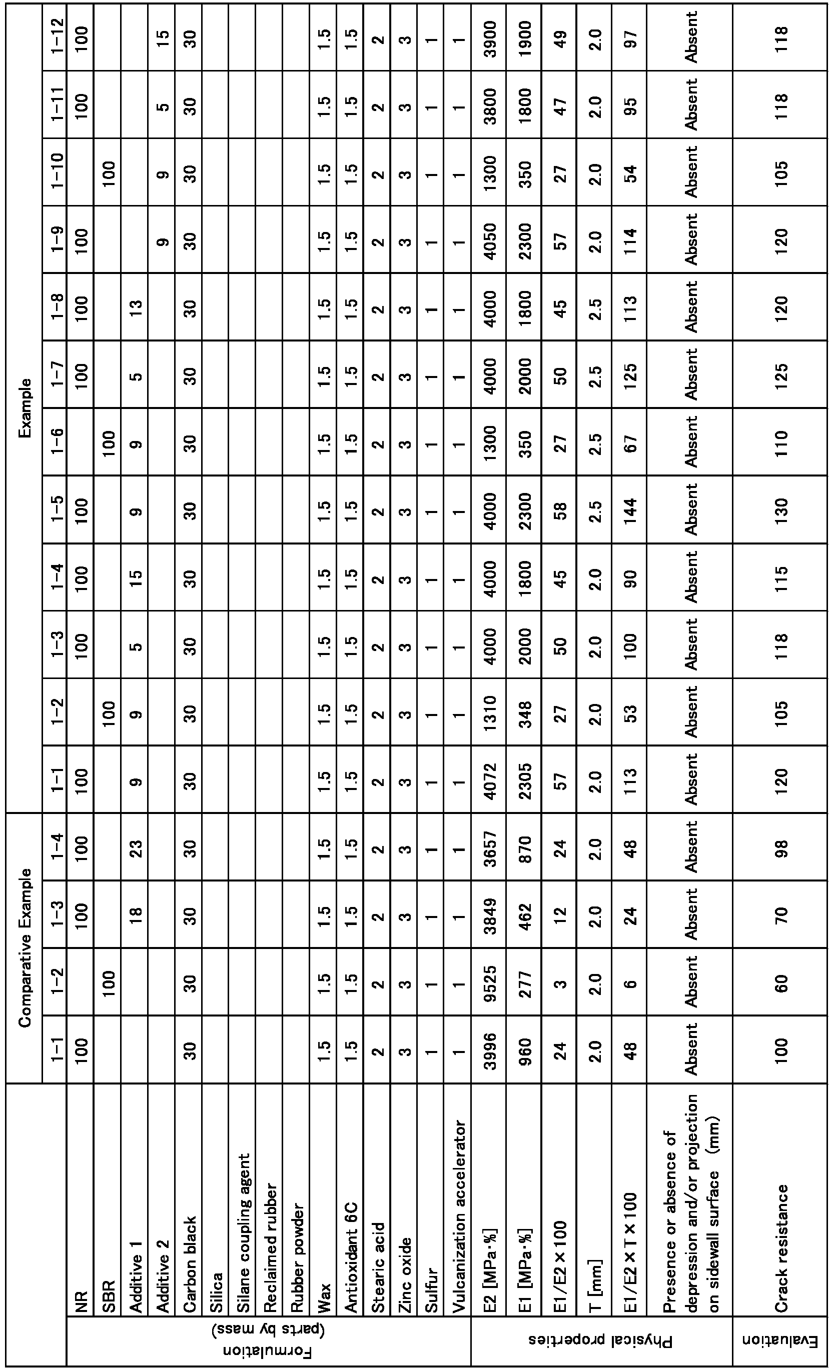

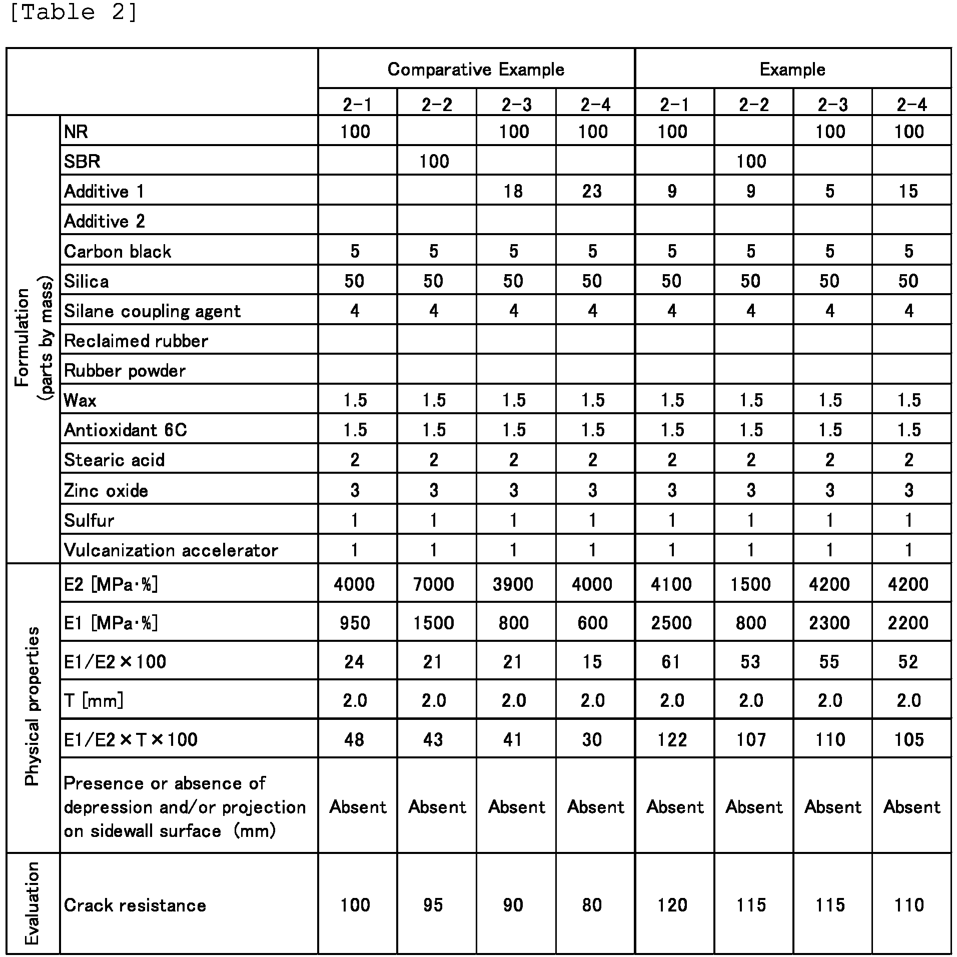

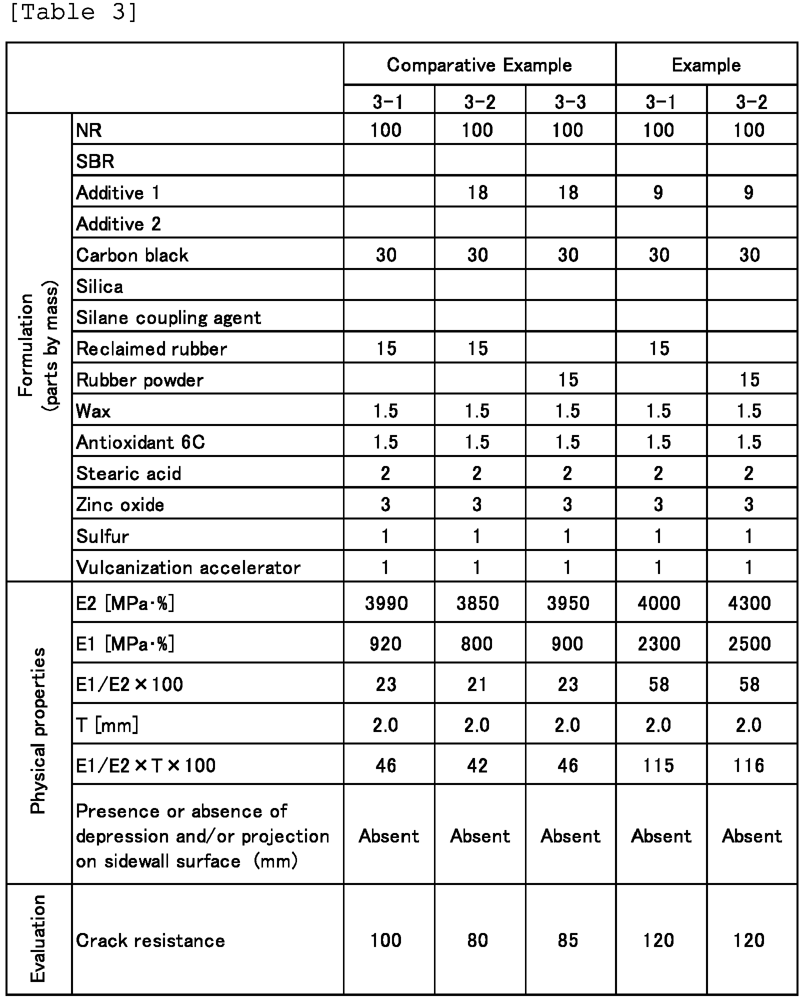

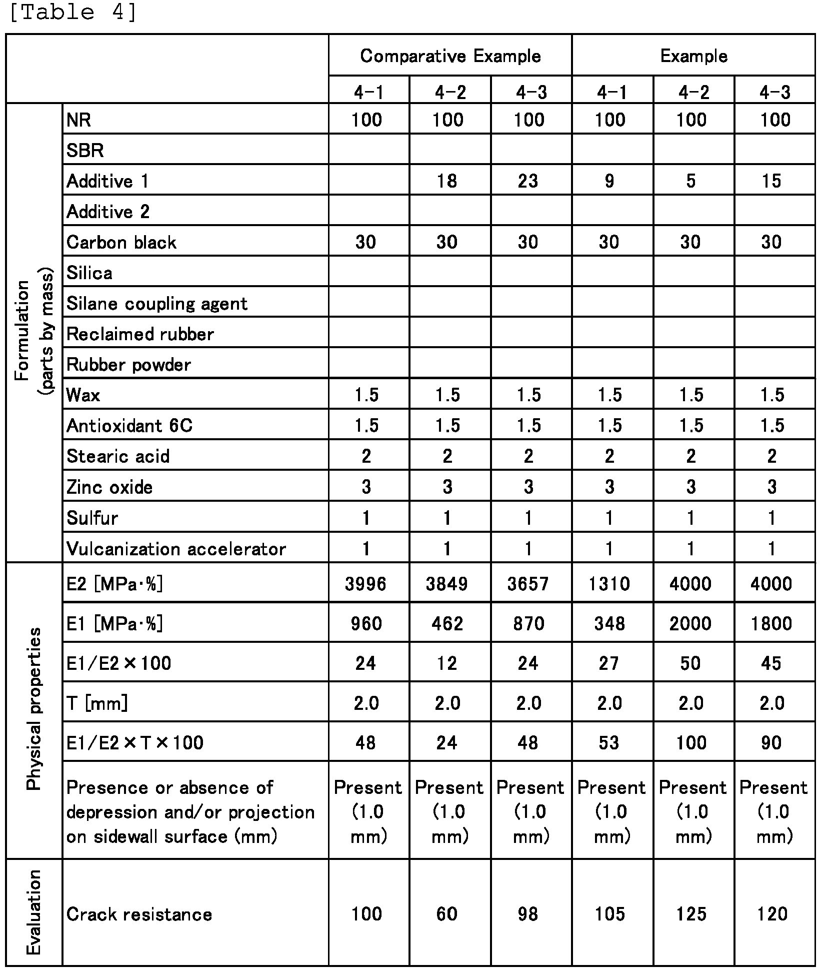

As shown in the tables, in the tires of the examples including a rubber layer satisfying relationships (1) and (2) with respect to the above-defined E1, E2, and thickness T, cracks or other defects on the surface of the tire component were reduced to provide an excellent market life.

### REFERENCE SIGNS LIST

1 pneumatic tire
2 tread portion
3 side portion
4 bead portion
5 bead core
6 carcass
6A, 6B carcass ply
6a body portion
6b folded portion
7 belt layer
7A, 7B belt ply
8 bead apex rubber
11 sidewall
PW outer end
T thickness of sidewall 11
50 mark indication
51 mark
55 sidewall portion
55s surface of sidewall portion 55
56 pedestal
56s surface of pedestal 56
X reference face

## Claims

1. A tire, comprising a rubber layer and satisfying the following relationships (1) and (2): $E 1 / E 2 \times 100 > 25$ $E 1 / E 2 \times T \times 100 > 50$
wherein E1 denotes a fracture energy (MPa·%) determined by cutting a No. 7 dumbbell-shaped specimen cut out of the rubber layer, heat-treating the specimen with cut sections attached to each other at 170°C for 12 minutes, and then stretching and deforming the specimen; E2 denotes a fracture energy (MPa·%) determined by heat-treating a No. 7 dumbbell-shaped specimen cut out of the rubber layer at 170°C for 12 minutes and then stretching and deforming the specimen; and T denotes a thickness (mm) of the rubber layer,
wherein the fracture energy E (MPa·%) is the value of "(TB × EB)/2" calculated from the tensile strength at break TB (MPa) and elongation at break EB (%) measured at 23°C in accordance with JIS K6251:2010,
wherein the rubber layer comprises at least one compound represented by the following formula (I): 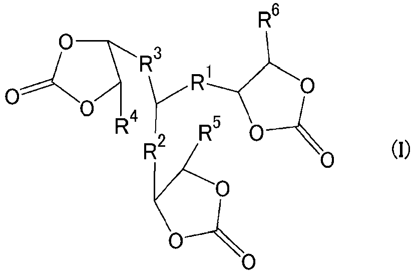
wherein R¹ to R³ are the same or different and each represent a substituted or unsubstituted divalent hydrocarbon group optionally containing a heteroatom, and R⁴ to R⁶ are the same or different and each represent a hydrogen atom or a substituted or unsubstituted monovalent hydrocarbon group optionally containing a heteroatom.

2. The tire according to claim 1,
wherein the rubber layer forms a tire component in a side portion.

3. The tire according to claim 1 or 2,
wherein the rubber layer comprises at least one isoprene-based rubber.

4. The tire according to any one of claims 1 to 3,
wherein the rubber layer comprises, per 100 parts by mass of a rubber component content therein, 3 to 15 parts by mass of the compound of formula (I).

5. The tire according to any one of claims 1 to 4,
wherein the rubber layer comprises, per 100 parts by mass of a rubber component content therein, 20 to 60 parts by mass of at least one filler.

6. The tire according to any one of claims 1 to 5,
wherein the rubber layer comprises at least one selected from the group consisting of reclaimed rubbers and rubber powders.

7. The tire according to any one of claims 1 to 6,
wherein a tire component formed of the rubber layer has a surface with at least one of a depression or projection having a height or depth of at least 0.5 mm.

8. The tire according to any one of claims 1 to 7,
wherein the tire satisfies the following two relationships with respect to the above-defined E1, E2, and T (mm): $E 1 / E 2 \times 100 \geq 45 ;$ $E 1 / E 2 \times T \times 100 \geq 90 .$

9. The tire according to any one of claims 1 to 8,
wherein the tire satisfies the following three relationships with respect to the above-defined E1, E2, and T (mm) : $E 1 \geq 800 MPa ⋅ % ;$ $E 2 \geq 1500 MPa ⋅ % ;$ $T \geq 1.5 mm .$

10. The tire according to any one of claims 1 to 9,
wherein the rubber layer comprises at least one of carbon black or silica,
when the rubber layer comprises the carbon black, it comprises, per 100 parts by mass of a rubber component content therein, 10 to 100 parts by mass of the carbon black, and
when the rubber layer comprises the silica, it comprises, per 100 parts by mass of a rubber component content therein, 10 to 100 parts by mass of the silica.

11. A rubber composition, comprising:
at least one rubber component; and
at least one compound represented by the following formula (I): 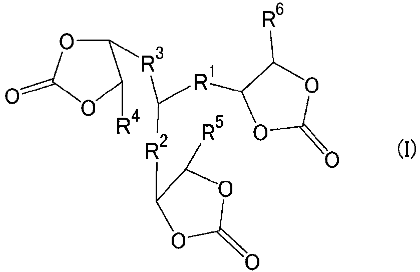 wherein R¹ to R³ are the same or different and each represent a substituted or unsubstituted divalent hydrocarbon group optionally containing a heteroatom, and R⁴ to R⁶ are the same or different and each represent a hydrogen atom or a substituted or unsubstituted monovalent hydrocarbon group optionally containing a heteroatom,
the rubber composition comprising 3 to 13 parts by mass of the compound of formula (I) per 100 parts by mass of the rubber component content.

12. The rubber composition according to claim 11,
wherein the rubber component includes at least one isoprene-based rubber.

13. The rubber composition according to claim 11 or 12,
wherein the rubber composition comprises 20 to 60 parts by mass of at least one filler per 100 parts by mass of the rubber component content.

14. The rubber composition according to any one of claims 11 to 13,
wherein the rubber composition comprises at least one selected from the group consisting of reclaimed rubbers and rubber powders.

## Patentansprüche

1. Reifen, der eine Kautschukschicht umfasst und die folgenden Beziehungen (1) und (2) erfüllt: $E 1 / E 2 \times 100 > 25$ $E 1 / E 2 \times T \times 100 > 50$
wobei E1 eine Bruchenergie (MPa·%) bezeichnet, bestimmt durch Ausschneiden eines hantelförmigen Prüfkörpers Nr. 7 aus der Kautschukschicht, Wärmebehandeln des Prüfkörpers mit aneinander befestigten Schnittbereichen bei 170°C für 12 Minuten und anschließendes Strecken und Verformen des Prüfkörpers; E2 eine Bruchenergie (MPa·%) bezeichnet, bestimmt durch Wärmebehandeln eines aus der Kautschukschicht ausgeschnittenen hantelförmigen Prüfkörpers Nr. 7 bei 170°C für 12 Minuten und anschließendes Strecken und Verformen des Prüfkörpers; und T eine Dicke (mm) der Kautschukschicht bezeichnet, wobei die Bruchenergie E (MPa·%) der Wert von "(TB × EB)/2" ist, berechnet aus der Bruchzugfestigkeit TB (MPa) und der Bruchdehnung EB (%), gemessen bei 23°C gemäß JIS K6251:2010,
wobei die Kautschukschicht mindestens eine durch die folgende Formel (I) dargestellte Verbindung umfasst: 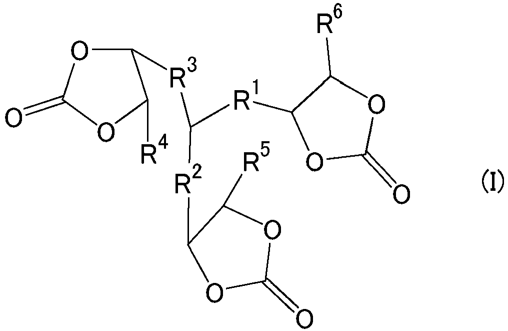
wobei R¹ bis R³ gleich oder verschieden sind und jeweils eine substituierte oder unsubstituierte zweiwertige Kohlenwasserstoffgruppe darstellen, die optional ein Heteroatom enthält, und R⁴ bis R⁶ gleich oder verschieden sind und jeweils ein Wasserstoffatom oder eine substituierte oder unsubstituierte einwertige Kohlenwasserstoffgruppe darstellen, die optional ein Heteroatom enthält.

2. Reifen nach Anspruch 1,
wobei die Kautschukschicht eine Reifenkomponente in einem Seitenabschnitt bildet.

3. Reifen nach Anspruch 1 oder 2,
wobei die Kautschukschicht mindestens einen isoprenbasierten Kautschuk umfasst.

4. Reifen nach einem der Ansprüche 1 bis 3,
wobei die Kautschukschicht, pro 100 Massenteile eines Kautschukkomponentengehalts darin, 3 bis 15 Massenteile der Verbindung der Formel (I) umfasst.

5. Reifen nach einem der Ansprüche 1 bis 4,
wobei die Kautschukschicht, pro 100 Massenteile eines Kautschukkomponentengehalts darin, 20 bis 60 Massenteile mindestens eines Füllstoffs umfasst.

6. Reifen nach einem der Ansprüche 1 bis 5,
wobei die Kautschukschicht mindestens eines umfasst, ausgewählt aus der Gruppe bestehend aus regenerierten Kautschuken und Kautschukpulvern.

7. Reifen nach einem der Ansprüche 1 bis 6,
wobei eine aus der Kautschukschicht gebildete Reifenkomponente eine Oberfläche mit mindestens einem von einer Vertiefung oder einem Vorsprung mit einer Höhe oder Tiefe von mindestens 0,5 mm aufweist.

8. Reifen nach einem der Ansprüche 1 bis 7,
wobei der Reifen die folgenden zwei Beziehungen in Bezug auf die vorstehend definierten E1, E2 und T (mm) erfüllt: $E 1 / E 2 \times 100 \geq 45 ;$ $E 1 / E 2 \times T \times 100 \geq 90 .$

9. Reifen nach einem der Ansprüche 1 bis 8,
wobei der Reifen die folgenden drei Beziehungen in Bezug auf die vorstehend definierten E1, E2 und T (mm) erfüllt: $E 1 \geq 800 MPa ⋅ % ;$ $E 2 \geq 1500 MPa ⋅ % ;$ $T \geq 1 , 5 mm .$

10. Reifen nach einem der Ansprüche 1 bis 9,
wobei die Kautschukschicht mindestens eines von Ruß oder Siliciumdioxid umfasst,
wenn die Kautschukschicht den Ruß umfasst, sie pro 100 Massenteile eines Kautschukkomponentengehalts darin 10 bis 100 Massenteile des Rußes umfasst, und
wenn die Kautschukschicht das Siliciumdioxid umfasst, sie pro 100 Massenteile eines Kautschukkomponentengehalts darin 10 bis 100 Massenteile des Siliciumdioxids umfasst.

11. Kautschukzusammensetzung, umfassend:
mindestens eine Kautschukkomponente; und
mindestens eine durch die folgende Formel (I) dargestellte Verbindung: 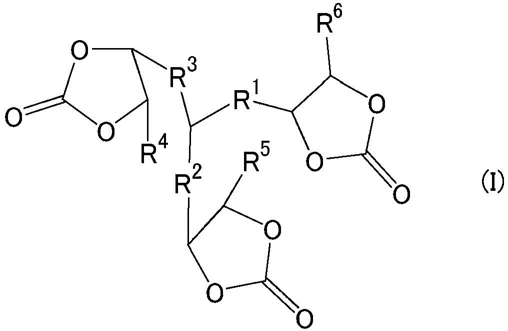
wobei R¹ bis R³ gleich oder verschieden sind und jeweils eine substituierte oder unsubstituierte zweiwertige Kohlenwasserstoffgruppe darstellen, die optional ein Heteroatom enthält, und R⁴ bis R⁶ gleich oder verschieden sind und jeweils ein Wasserstoffatom oder eine substituierte oder unsubstituierte einwertige Kohlenwasserstoffgruppe darstellen, die optional ein Heteroatom enthält,
wobei die Kautschukzusammensetzung pro 100 Massenteile des Kautschukkomponentengehalts 3 bis 13 Massenteile der Verbindung der Formel (I) umfasst.

12. Kautschukzusammensetzung nach Anspruch 11,
wobei die Kautschukkomponente mindestens einen isoprenbasierten Kautschuk umfasst.

13. Kautschukzusammensetzung nach Anspruch 11 oder 12,
wobei die Kautschukzusammensetzung pro 100 Massenteile des Kautschukkomponentengehalts 20 bis 60 Massenteile mindestens eines Füllstoffs umfasst.

14. Kautschukzusammensetzung nach einem der Ansprüche 11 bis 13,
wobei die Kautschukzusammensetzung mindestens eines umfasst, ausgewählt aus der Gruppe bestehend aus regenerierten Kautschuken und Kautschukpulvern.

## Revendications

1. Pneumatique, comprenant une couche de caoutchouc et satisfaisant aux relations (1) et (2) suivantes : $E 1 / E 2 \times 100 > 25$ $E 1 / E 2 \times T \times 100 > 50$
où E1 désigne une énergie de rupture (MPa·%) déterminée en découpant dans la couche de caoutchouc une éprouvette en forme d'haltère n° 7, en soumettant l'éprouvette à un traitement thermique à 170 °C pendant 12 minutes, les surfaces de coupe étant attachées l'une à l'autre, puis en étirant et en déformant l'éprouvette ; E2 désigne une énergie de rupture (MPa·%) déterminée en soumettant une éprouvette en forme d'haltère n° 7, découpée dans la couche de caoutchouc, à un traitement thermique à 170 °C pendant 12 minutes, puis en étirant et en déformant l'éprouvette ; et T désigne une épaisseur (mm) de la couche de caoutchouc,
dans lequel l'énergie de rupture E (MPa·%) est la valeur de « (TB × EB)/2 », calculée à partir de la résistance à la traction à la rupture TB (MPa) et d'un allongement à la rupture EB (%), mesurés à 23 °C conformément à la norme JIS K6251:2010,
dans lequel la couche de caoutchouc comprend au moins un composé représenté par la formule (I) suivante : 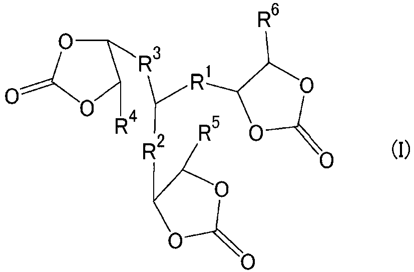
où R¹ à R³ sont identiques ou différents et représentent chacun un groupe hydrocarboné divalent substitué ou non substitué pouvant éventuellement contenir un hétéroatome, et R4 à R6 sont identiques ou différents et représentent chacun un atome d'hydrogène ou un groupe hydrocarboné monovalent substitué ou non substitué pouvant éventuellement contenir un hétéroatome.

2. Pneumatique selon la revendication 1,
dans lequel la couche de caoutchouc forme un composant de pneumatique dans une portion latérale.

3. Pneumatique selon la revendication 1 ou 2,
dans lequel la couche de caoutchouc comprend au moins un caoutchouc à base d'isoprène.

4. Pneumatique selon l'une quelconque des revendications 1 à 3,
dans lequel la couche de caoutchouc comprend, pour 100 parts en masse d'une teneur en composant de caoutchouc, 3 à 15 parts en masse du composé de formule (I).

5. Pneumatique selon l'une quelconque des revendications 1 à 4,
dans lequel la couche de caoutchouc comprend, pour 100 parts en masse d'une teneur en composant de caoutchouc, 20 à 60 parts en masse d'au moins une charge.

6. Pneumatique selon l'une quelconque des revendications 1 à 5,
dans lequel la couche de caoutchouc comprend au moins un élément choisi parmi les caoutchoucs recyclés et les poudres de caoutchouc.

7. Pneumatique selon l'une quelconque des revendications 1 à 6,
dans lequel un composant de pneumatique formé à partir de la couche de caoutchouc présente une surface comportant au moins soit un creux, soit une projection ayant une hauteur ou une profondeur d'au moins 0,5 mm.

8. Pneumatique selon l'une quelconque des revendications 1 à 7,
dans lequel le pneumatique satisfait aux deux relations suivantes, en fonction des valeurs de E1, E2 et T (mm) définies ci-dessus : $E 1 / E 2 \times 100 \geq 45 ;$ $E 1 / E 2 \times T \times 100 \geq 90 .$

9. Pneumatique selon l'une quelconque des revendications 1 à 8, dans lequel le pneumatique satisfait aux trois relations suivantes, en fonction des valeurs de E1, E2 et T (mm) définies ci-dessus : $E 1 \geq 800 MPa ⋅ % ;$ $E 2 \geq 1 500 MPa ⋅ % ;$ $T \geq 1.5 mm .$

10. Pneumatique selon l'une quelconque des revendications 1 à 9,
dans lequel la couche de caoutchouc comprend au moins un élément parmi le noir de carbone et la silice,
quand la couche de caoutchouc comprend du noir de carbone, elle comprend, pour 100 parts en masse d'une teneur en composant de caoutchouc, 10 à 100 parts en masse du noir de carbone, et
quand la couche de caoutchouc comprend de la silice, elle comprend, pour 100 parts en masse de la teneur en composant caoutchouc, 10 à 100 parts en masse de la silice.

11. Composition de caoutchouc, comprenant :
au moins un composant de caoutchouc ; et
au moins un composé représenté par la formule (I) suivante : 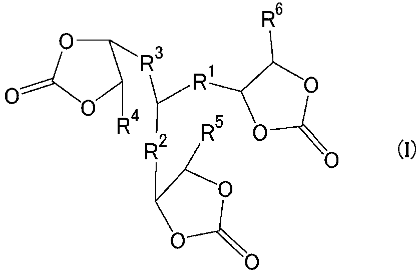
où R1 à R3 sont identiques ou différents et représentent chacun un groupe hydrocarboné divalent substitué ou non substitué pouvant éventuellement contenir un hétéroatome, et R4 à R6 sont identiques ou différents et représentent chacun un atome d'hydrogène ou un groupe hydrocarboné monovalent substitué ou non substitué pouvant éventuellement contenir un hétéroatome,
la composition de caoutchouc comprenant 3 à 13 parts en masse du composé de formule (I) pour 100 parties en masse de la teneur en composant de caoutchouc.

12. Composition de caoutchouc selon la revendication 11,
dans laquelle le composant de caoutchouc inclut au moins un caoutchouc à base d'isoprène.

13. Composition de caoutchouc selon la revendication 11 ou 12,
dans laquelle la composition de caoutchouc comprend 20 à 60 parts en masse d'au moins une charge pour 100 parts en masse de la teneur en composant de caoutchouc.

14. Composition de caoutchouc selon l'une quelconque des revendications 11 à 13,
dans laquelle la composition de caoutchouc comprend au moins un élément choisi parmi le groupe constitué de caoutchoucs recyclés et de poudres de caoutchouc.
